# NEUE EUROPÄISCHE PATENTSCHRIFT

(11) **EP 0 697 580 B2**
(45) Veröffentlichungstag und Bekanntmachung des Hinweises auf die Entscheidung über den Einspruch: **02.01.2003**
(45) Hinweis auf die Patenterteilung: 03.02.1999
(21) Anmeldenummer: 95112098.9
(22) Anmeldetag: 01.08.1995
(51) Int. Cl.: G01C 21/20, G08G 1/0968

(54) **Navigationssystem für ein Fahrzeug**
Navigation system for a vehicle
Système de navigation pour un véhicule

(30) Priorität: 17.08.1994 DE 4429121
(43) Veröffentlichungstag der Anmeldung: 21.02.1996
(73) Patentinhaber: SIEMENS AKTIENGESELLSCHAFT, 80333 München (DE)
(72) Erfinder: Ebner, Roland, Dipl.-Ing., D-93170 Bernhardswald (DE); Förster, Robert, Dipl.-Ing., D-93086 Wörth (DE)

(56) Entgegenhaltungen:
- EP-A- 0 317 181
- EP-A- 0 379 198
- WO-A-92/10824
- WO-A-92/14215
- DE-A- 4 139 581
- DE-A- 4 300 927
- US-A- 5 067 081
- VNIS 1992 Vehicle Navigation & Information Systems Conference Record, 2-4 September 1992, Oslo, Norwegen, Seiten 1-7, H.SODEIKAT:"Dynamic Route Guidance and Traffic Management Operations in Germany"
- Funkschau 22/1986, "Auto-Navigation:elektronische Lotsen",S.99-102
- Verband der Automobilindustrie e.V. (Herausgeber): Begleitbroschürezur Ausstellung "Telematik für den Verkehr in Europa", 22.-23.07.94, S.12-15
- ISATA-PROC. 93AT025, 26th ISATA, Proceedings: Advanced Transport Telematics/Intellegent Vehicle Highway Systems, S.59-66 (H.Sodeikat)
- W.Boerman:"The CARIN Guidance System...", Kongress"Le Transport Automobile dans la ville" 26-28.01.94, Lille (Frankreich), SAE94/3333

## Beschreibung

Die Erfindung bezieht sich auf eine Navigationseinrichtung für Fahrzeuge gemäß dem Oberbegriff von Patentanspruch 1, insbesondere auf eine Navigationseinrichtug für Kraftfahrzeuge.

Eine solche Navigationseinrichtung ist aus der Offenlegungsschrift DE 43 00 927 A1 bekannt.

Andere bekannte Navigationssysteme bestehen aus einer Einrichtung zur Standortbestimmung des Fahrzeuges (üblicherweise Koppelnavigationseinrichtung mit einer Magnetfeldsonde und einem Wegstrekkenmesser oder GPS-Empfänger), einer Einrichtung zur Eingabe des gewünschten Fahrtzieles, einer Einrichtung zur (optischen oder akustischen) Ausgabe der jeweiligen Fahrtrichtungsdaten, die von einem mikroprozessorgesteuerten Navigationsrechner aufgrund der Eingaben von Standort und Ziel anhand einer im Fahrzeug (auf CD, MD, DCC oder Chipkarten) gespeicherten Wegenetzkarte oder mittels zusätzlich aufzubauender, flächendeckender, sehr kostenintensiver Infrastruktursysteme, welche über Infrarot- oder Mikrowellen-Sende- und Empfangsanlagen mit dem Fahrzeug kommunizieren, ermittelt werden.

Aus der EP 0 261 404 A1 ist eine Navigationseinrichtung mittels Koppelnavigation und im Fahrzeug gespeicherter Wegenetzkarte bekannt.

Bei dem Autoradio Blaupunkt Berlin RCM 303-A ist eine Navigationseinrichtung mit GPS-Empfänger und auf CD-ROM gespeicherter Wegenetzkarte vorgesehen.

Der Benutzer solcher Einrichtungen kann nur mit dem jeweils vorhandenen Wegenetz-Datensatz navigieren. Wegenetzdaten, die im Fahrzeug nicht vorhanden oder nicht mehr aktuell sind, können zu Problemen führen.

Aufgabe der Erfindung ist es demgegenüber, ein Navigationssystem der genannten Art zu schaffen, welches ohne im Fahrzeug gespeicherte Wegenetzkarten und ohne ein speziell für das Navigationssystem aufgebautes, kostenaufwendiges Infrastruktursystem auskommt.

Diese Aufgabe wird durch die in Anspruch 1 genannten Merkmale gelöst. Weitere Ausgestaltungsmöglichkeiten sind in den abhängigen Ansprüchen angegeben.

Das erfindungsgemäße Navigationssystem nutzt die bereits in weiten Bereichen flächendeckend vorhandene, in den übrigen Bereichen in zügigem Ausbau befindliche Infrastruktur von Funk- bzw. Mobilfunktelefon-Systemen, die beispielsweise als AMPS-, PCN-, C-Netz-, NMT-, E-TACS-, oder GSM(= D-Netz)-Systeme bekannt sind.

Insbesondere das mit GSM bezeichnete, im 900MHz-Bereich arbeitende digitale Mobilfunktelefonsystem eignet sich für die vorgesehene Anwendung besonders, weil es für die Übertragung von Daten bereits eigene Datenkanäle aufweist.

Damit können speziell für das Navigationssystem aufgebaute, kostenaufwendige Infrastruktursysteme und in den Fahrzeugen zusätzliche Infrarot- oder Mikrowellen-Sende- und Empfangsanlagen bzw. ihre Aktualität verlierende Wegenetz-Speicher (z.B. CD-ROM-Laufwerke, MD-Laufwerke, Kartenleser) eingespart werden.

In den Fahrzeugen selbst können die von den Fahrzeugherstellern für Mobilfunk vorgesehenen Einbauräume und Antennenplätze genutzt werden, was zusätzlichen Einbauraum spart und auch die EMV-Verträglichkeit dieser Geräte fördert.

Falls im Fahrzeug nur ein Navigationsgerät, aber kein Mobilfunktelefon gewünscht wird, so können dessen für Sprachübertragung benötigte Teile, wie Sprach-Coder und -Decoder, NF-Teil u.s.w. weggelassen werden.

Ein weiterer Vorteil des erfindungsgemäßen Navigationssystems ist, daß das Navigationsgerät, zumindest teilweise (Eingabeeinrichtung und Speicher des Navigationsrechners) in ein sog. "Handy" (tragbarer Teil des Mobiltelefon-Gerätes integrierbar ist. Diese Teile können, wie bei Mobilfunk-Telefonen üblich, mit den im Fahrzeug fest eingebauten Teilen über eine Datenschnittstelle (Funk, Kabel, IR-Auschluß u.s.w.) verbunden sein. Mit diesem Handy können die benötigten oder gewünschten Daten auch außerhalb des Fahrzeuges aus dem zentralen Speicher Sp abgerufen werden.

Auch Nachrüstgeräte sind einfach in ein Mobilfunk-Telefongerät integrierbar. Ein Navigations-Handy benutzt die im Fahrzeug vorhandenen Schnittstellen des Mobilfunk-Telefongerätes für Freisprechen und Dateneingabe. Das Navigationsgerät kann dabei im Fahrzeug selbst, über Spracheingabe, über im Fahrzeug vorhandene Fahrerinformationssysteme oder über zusätzliche, in Reichweite des Fahrers im Fahrzeug angeordnete Schalter benutzt werden.

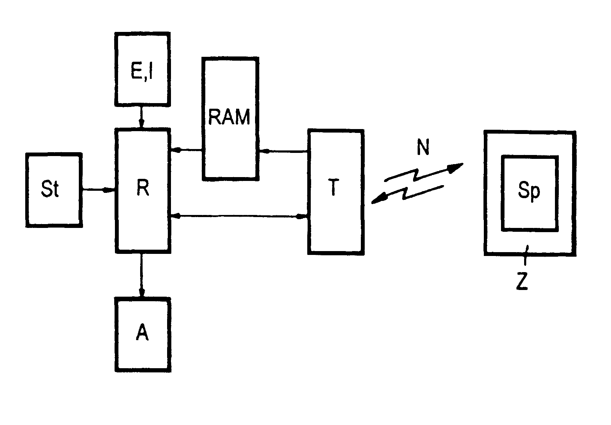

Die Erfindung wird anhand eines in der Zeichnung schematisch dargestellten Ausführungsbeispiels näher erläutert.

Ein nicht dargestelltes Fahrzeug ist mit einem Mobilfunktelefon-Gerät T eines an sich bekannten Mobilfunk-Telefonsystems ausgerüstet, welches über ein durch Pfeile angedeutetes Mobilfunknetz N über flächendeckend verteilte Sende-Empfänger mit anderen Telefon- und Mobilfunktelefon-Geräten verbindbar ist.

In dieses Mobilfunktelefon-Gerät T ist eine Navigationseinrichtung, bestehend aus einem Navigationsrechner R, einem Speicher RAM, einem DGPS-(= Differential Global Positioning System)Empfänger St als Einrichtung zur Eingabe des Fahrzeug-Standortes, mit einer Einrichtung E zur Eingabe des gewünschten Fahrt zieles und mit einer Einrichtung A zur optischen Ausgabe der jeweiligen Fahrtrichtungsdaten integriert.

Bei einfacheren Ausführungsformen von Mobilfunktelefon-Geräten kann für die Eingabe des Fahrzeug-Standortes anstelle eines DGPS-Empfängers auch eine manuelle Eingabe von aus einer Tabelle oder Landkarte entnommenen, dem jeweiligen Standort zugeordneten Daten über die Einrichtung E zur Eingabe des gewünschten Fahrtzieles erfolgen.

In dem Mobilfunknetz N ist wenigstens eine Leitstelle (Zentrale Z) vorgesehen, welche einen zentralen Speicher Sp aufweist, in dem sämtliche Wegenetzdaten in an sich bekannter Weise gespeichert sind.

Im zentralen Speicher Sp sind auch den entsprechenden Wegenetzstrecken zugeordnete verkehrsbezogene Informationen (Staumeldungen, Baustellen, Umleitungen, Geschwindigkeitsbegrenzungen, Eisglätte, Nebel u.s.w.) gespeichert, welche bei Anforderung der diese Wegenetzstrecken enthaltenden Wegenetzdaten mitgesendet werden.

Wird nun das Navigationsgerät im Fahrzeug aktiviert, so werden automatisch die Standortdaten (Startort) von dem DGPS-Empfänger St ermittelt und in den Navigationsrechner R übertragen. Nach Eingabe des Fahrtzieles über die Eingabe-Einrichtung E fordert der Navigationsrechner R automatisch über das Mobilfunknetz N aus dem zentralen Speicher die erforderlichen Wegenetzdaten - entweder alle Daten sofort oder nach und nach - an, überträgt sie in seinen Speicher RAM und ermittelt daraus in bekannter Weise die erforderlichen Fahranweisungen, welche er an den entsprechenden Wegpunkten über die Ausgabe-Einheit A ausgibt und auf diese Weise den Fahrzeuglenker und das Fahrzeug unter Berücksichtigung der erhaltenen verkehrsbezogenen Informationen zu dem eingegebenen Ziel leitet.

Um die verkehrsbezogenen Informationen in dem Navigationssystem laufend auf aktuellstem Stand zu halten, ist vorgesehen, daß diese, soweit sie zu den abgerufenen Wegenetzdaten gehören, in gewissen Zeitabständen erneut automatisch abgerufen werden und bei Änderung dieser Informationen gegenüber den früher erhaltenen, eine neue Routenberechnung erfolgt.

Um die verkehrsbezogenen Informationen in dem Navigationssystem laufend auf aktuellstem Stand zu halten, ist aber auch vorgesehen, zumindest in ausgewählten Fahrzeugen, eine mit dem Navigationsrechner R verbundene, in diesem Ausführungsbeispiel mit der Eingabeeinrichtung E gekoppelte Informations-Eingabeeinrichtung 1 einzubauen, über welche diese verkehrsbezogenen Informationen zur Leitstelle (Zentrale Z) zu übermitteln sind, um dort nach Überprüfung sofort in den zentralen Speicher Sp eingegeben werden zu können.

Die Einrichtung E zur Eingabe des gewünschten Fahrtzieles und die Informations-Eingabeeinrichtung I, so eine solche vorhanden ist, sind in das Eingabe-Tastenfeld des Mobilfunk-Telefongerätes integriert.

In dem zentralen Speicher Sp sind des weiteren auch Zusatzinformationen gespeichert, beispielsweise Ziel-Adressen von Bahn- und Busbahnhöfen, von Flughäfen (mit beispielsweise den wichtigsten Ankunfts- und Abfahrtszeiten), von Reparaturwerkstätten, Tankstellen, Ärzten, Krankenhäusern, Restaurants, Parkplätzen (samt Belegung, Gebühren und ggf. Vorbuchungsmöglichkeiten), Theatern, Museen, Kirchen u.s. w. u.s.w., von denen eine bestimmte Anzahl der dem Zielort oder dem momentanen Standort des Fahrzeuges am nächsten liegenden Adressen (bzw. deren Daten) ebenfalls abgerufen und angezeigt werden können.

In der Verknüpfung des bekannten Navigationssystems EUROSCOUT mit dem erfindungsgemäßen Navigationssystem sind weitere Möglichkeiten wie Standorteingabe und Überprüfung über "intelligente" Map-Matching-Verfahren, oder direkter Abgleich beim Vorbeifahren an einer EUROSCOUT-Bake denkbar.

## Patentansprüche

1. Navigationssystem für ein Fahrzeug,
mit einem Navigationsrechner (R),
mit einer Speichereinrichtung (Sp) für Wegenetzdaten,
mit einer Einrichtung (St) zur Standortbestimmung des Fahrzeugs,
mit einer Einrichtung (E) zur Eingabe des gewünschten Fahrziels, und
mit einer Einrichtung zur Ausgabe der jeweiligen Fahranweisung,
mit zumindest den eine Datenübertragung ermöglichenden Teilen eines tragbaren Funk- oder Mobilfunk-Telefongeräts (T) eines flächendeckenden Funk- oder Mobilfunk-Telefonsystems, mit welchem der Navigationsrechner (R) verbunden ist,
wobei die Speichereinrichtung (Sp) für die Wegenetzdaten zentral in wenigstens einer Zentrale (Z) des Funk- oder Telefonsystems und parallel von mehreren Teilnehmern gleichzeitig abfragbar angeordnet ist und
in der zentralen Speichereinrichtung (Sp) auch verkehrsbedingte Informationen und Zusatzinformationen speicherbar sind,
wobei weiterhin die für die Routenberechnung benötigten Wegenetzdaten und sämtliche verkehrsbezogenen oder Zusatz-Informationen vom Navigationsrechner (R) über das Funk- oder Mobilfunk-Telefonnetz (N) aus der zentralen Speichereinrichtung (Sp) abrufbar und in einen dem Navigationsrechner (R) zugeordneten Speicher (RAM) übertragbar sind und zumindest die Eingabeeinrichtung (E) und der dem Navigatiorisrechner (R) zugeordnete Speicher (RAM) in das Funk- oder Mobilfunk-Telefongerät (T) oder in dessen tragbaren Teil integriert ist.

2. Navigationssystem nach Anspruch 1, **dadurch gekennzeichnet, daß** die Einrichtung (St) zur Bestimmung des jeweiligen Fahrzeugstandortes ein mit dem Navigationsrechner (R) verbundener GPS- oder DGPS-Empfänger ist.

3. Navigationssystem nach Anspruch 1, **dadurch gekennzeichnet, daß** die gewünschten Zusatzinformationen bezüglich des Zielortes oder des Standortes abfragbar sind.

4. Navigationssystem nach Anspruch 1, **dadurch gekennzeichnet, daß** mit dem Navigationsrechner (R) eine Einrichtung (I) zur Eingabe von Informationen und deren Übertragung zur Zentrale (Z) des Funk- oder Mobilfunktelefonsystems verbunden ist.

5. Navigationssystem nach Anspruch 1, **dadurch gekennzeichnet, daß** die verkehrsbezogenen Informationen, soweit sie zu den abgerufenen Wegenetzdaten gehören, in gewissen Zeitabständen erneut automatisch abrufbar sind und bei Änderung dieser Informationen gegenüber den früher erhaltenen, eine neue Route berechenbar ist.

## Claims

1. Navigation system for a vehicle, having a navigation computer (R), having a storage device (Sp) for route network data, having a device (St) for determining the location of the vehicle, having a device (E) for inputting the desired destination, and having a device for outputting the respective travel instruction, having at least the parts, permitting a data transmission, of a portable radio or mobile radio telephone device (T) of a radio or mobile radio telephone system with wide area coverage, to which the navigation computer (R) is connected, the storage device (Sp) for the route network data being arranged centrally in at least one control centre (Z) of the radio or telephone system and so as to be capable of being interrogated in parallel by a plurality of subscribers at the same time, and it also being possible to store traffic-related information and supplementary information in the central storage device (Sp), it also being possible to call the route network data required for the calculation of a route and all of the traffic-related or supplementary information to be called by the navigation computer (R) from the central storage device (Sp) via the radio or mobile radio telephone network (N) and transmitted into a memory (RAM) which is assigned to the navigation computer (R), and at least the input device (E) and the memory (RAM) which is assigned to the navigation computer (R) being integrated into the radio or mobile radio telephone device (T) or into its portable part.

2. Navigation system according to Claim 1, **characterized in that** the device (St) for determining the respective location of the vehicle is a GPS or DGPS receiver connected to the navigation computer (R).

3. Navigation system according to Claim 1, **characterized in that** the desired additional information relating to the destination or the location can be called.

4. Navigation system according to Claim 1, **characterized in that** a device (I) for inputting information and transmitting it to the control centre (Z) of the radio or mobile radio system is connected to the navigation computer (R).

5. Navigation system according to Claim 1, **characterized in that** the traffic-related information can, if associated with the called route network data, be called again automatically at specific time intervals and a new route can be calculated when this information changes in comparison with the information obtained earlier.

## Revendications

1. Système de navigation pour un véhicule, comportant un calculateur de navigation (R), un dispositif de mémoire (Sp) pour des données de réseau routier, un dispositif (St) pour la détermination de la position du véhicule, un dispositif (E) pour l'entrée de la destination souhaitée et un dispositif (A) pour la sortie de l'indication de route respective, au moins les parties permettant une transmission de données d'un appareil portatif de radio ou d'un radiotéléphone mobile(T) d'un système de radio ou de radiotéléphonie mobile couvrant une surface, auxquelles est relié le calculateur de navigation (R), le dispositif de mémoire (Sp) pour les données de réseau routier étant placé au centre dans au moins un poste central (Z) du système de radio ou de téléphonie et pouvant être interrogé simultanément en parallèle par plusieurs participants, et des informations concernant le trafic et des informations supplémentaires pouvant également être stockées dans le dispositif de mémoire centrale (Sp),
tandis qu'en outre
les données de réseau routier nécessaires pour le calcul de la route et toutes les informations concernant le trafic ou supplémentaires peuvent être appelées par le calculateur de navigation (R) par le réseau de radio ou de radiotéléphonie mobile (N) dans un dispositif de mémoire centrale (Sp) et transmises à une mémoire (RAM) associée au calculateur de navigation (R) et qu'au moins le dispositif d'entrée (E) et la mémoire (RAM) associée au calculateur de navigation (R) sont intégrés dans l'appareil de radio ou de radiotéléphonie mobile (T) ou dans sa partie portative.

2. Système de navigation selon la revendication 1, **caractérisé en ce que** le dispositif (St) de détermination de la position correspondante du véhicule est un récepteur GPS ou DGPS relié au calculateur de navigation (R).

3. Système de navigation selon la revendication 1, **caractérisé en ce que** les informations supplémentaires souhaitées concernant la destination ou la position peuvent être demandées.

4. Système de navigation selon la revendication 1, **caractérisé en ce qu'**un dispositif (I) pour l'entrée d'informations et leur transmission au poste central (Z) du système de radio ou de radiotéléphonie mobile est relié au calculateur de navigation (R).

5. Système de navigation selon la revendication 1, **caractérisé en ce que** les informations concernant le trafic, si elles appartiennent aux données de réseau routier appelées, peuvent être appelées de nouveau automatiquement à certains intervalles de temps et une nouvelle route peut être calculée en cas de modification de ces informations par raport à celles obtenues antérieurement.
